# EUROPEAN PATENT APPLICATION

(11) **EP 3 308 618 A1**
(43) Date of publication of application: **18.04.2018**
(21) Application number: 16810644.1
(22) Date of filing: 03.06.2016
(51) Int. Cl.: A01C 7/06, A01C 15/16

(54) **SOLID FERTILISER METERING ASSEMBLY**

(30) Priority: 15.06.2015 BR 102015140355
(71) Applicant: Clara Presentes LTDA-ME, 99010-110 Passo Fundo RS (BR)
(72) Inventor: BAUMGARDT, Valdir, 99010-110 Passo Fundo RS (BR)
(74) Representative: Beetz & Partner mbB
(86) International application number: PCT/BR2016/050125
(87) International publication number: WO 2016/201539

(57) **Abstract**

A solid fertilizer metering assembly belongs to the field of mechanisms used in agricultural machines and implements. The assembly 1 comprises a metering spindle 2 in a single cylindrical conical body, with constant screw turns 3 consisting of one or more constant screw turns which follow the initial helical screw angle, besides a casing 4 also of conical cylindrical shape, providing an empty space 5 at the end of the helical screw of the said metering spindle 2 and an outlet 6 for the fertilizer towards the line conductor, wherein the structure of the bearing assembly 7 for the transmission of the longitudinal shaft associated with the metering spindle shaft assembly 8 separated from the base 9 of the metering assembly ensures correct meshing of the longitudinal gearing 10 with the gearing 11 of the metering shaft, and the separation of the bearings from the metering assembly by means of the rib-cooled motor 12 mounted next to the bearings 13 and to the actuation pinion 14 of the metering spindle 2, the longitudinal gearing 10 also using roller bearings 13a.

## Description

### FIELD OF THE INVENTION

The present specification for a patent of invention is directed to a solid fertilizer metering assembly belonging to the field of application of the mechanisms used in agricultural machines and implements.

More specifically, the said solid fertilizer metering assembly was devised, designed and developed to be coupled to agricultural implements in general, such as fertilizer-seeders for fine grains, coarse grains, or just fertilizers, aiming at providing significant improvements in the process of fertilizer dosage with minimum differences in distribution among one metering device and the other ones, aiming further at introducing new concepts of materials to be used in the manufacture of same, all these being acquired by research and laboratory and field tests.

Besides homogenizing the fertilizer distribution between one metering assembly and another one, the present development aims at speeding the assembling and maintenance of the present assembly, with well-established connections, removing the possibility of mistakes caused by the conventional assembling process, with pre-established adjustments in the manufacture of the items, encompassing also the assembling process, by connections and quick coupling locking, belonging to the parts' body.

### BACKGROUND INFORMATION

As relates to the state-of-the-art technique, it is well-known that there are several previous concepts available in the market of agricultural machines, related to fertilizer metering devices directed to optimizing the performance of the product as such, including the quality in the deposition of the fertilizer on the soil, aiming consequently at productivity improvement.

For sure, each concept has its peculiarities and specialties, both for the fertilizer dispensing and the assembling and maintenance steps. A few of these concepts, directed basically to the correction of irregularities in the fertilizer deposition are considered, for example, in the following documents:
- Brazilian Application BR0303586-7 - this document relates to a fertilizer and seed distribution system for seeders-fertilizers, agricultural implements and machines in general, where the dispensing method comprises, in short, a spring able to convey the product up to a slope/bulkhead which works by positive interference, and from then to the outlet nozzle and finally to the soil, promoting an effect of product spill, instead of dosing by strikes, which would assure a more suitable product dosage.
- Brazilian Application BR0400933-9 - related to a solid fertilizer metering system developed to assure continuous flow and precise dosage with the minimum variation between metering devices, and comprising an actuation longitudinal shaft on which is mounted a worm shaft housed in a casing/sleeve, which in turn is mounted within a housing, serving as the assembly support in the fertilizer box, connection for the transmission system, sleeve housing and also for directing the solid fertilizer towards the soil, so that the fertilizer outlet is positioned on the sideline.
- Brazilian Application PI 0402211-4 - brings, basically, a fertilizer and/or correction compounds dispenser, of the wormlike kind, which can be coupled to agricultural machines, providing improvements in performance resulting from the fertilizers' uniform distribution in the longitudinal direction, keeping the uniformity standard along the lines of application, both in plane and inclined crops, in any direction of the machine inclination, upwards or downwards and with side inclination to left or right in the longitudinal direction of the utility machine, making also easier the task of visual control, cleaning, exchange of the wormlike shaft and maintenance of the dispenser assembly, besides having one or more types of removable and interchangeable level regulators, perpendicular to the actuating shaft in order to suit the physical properties of several fertilizers or correction compounds.

### SUMMARY OF THE INVENTION

Following the same aspect and aiming at securing the quality of the development combined to the practical aspects of the manufacture and maintenance of the solid fertilizer metering assembly, the object of the present application was devised, designed and developed, aiming at removing the drawbacks of the current technique, bringing as main novelty the concept of a metering spindle in a single body, of conical shape and cylindrical cone, with constant screw turns comprising one or more turns, keeping the initial helical screw angle.

As a second novelty, the application provides the casing of the metering spindle, also of conical cylindrical shape, creating an empty space at the end of the helicoids of the metering spindle and the outlet of the fertilizer towards the line conductor, innovating in the way the fertilizer is conveyed, providing continuous flow, provided at first by the screw turns and further by the fertilizer itself up to the outlet.

The structure of the transmission bearing separated from the metering assembly base secures the correct meshing of the gearings, with no need of adjustment, and the separation in the bearing related to the metering spindle provided by the rib-cooled motor mounted next to the bearing and to the actuation pinion of the metering spindle eliminates the fertilizer contact with the bearings.

The connection of the bearing to the metering assembly is assured by the quick locking system by means of the latches belonging to the bearing, in a cavity of the metering assembly base, the same occurring with the nozzle.

The structure of the bearing assembly is obtained by interconnecting parts so as to provide the perfect adjustment of same and the practical effect of the assembly of components, further assured by positioners (male and female) between them.

The casing of the metering spindle positioned with the opening downwards (180° of the working position) becomes the isolating element of the solid fertilizer flow, dispensing with the use of any other isolating device.

The positioning of the metering assembly casing is assured by the common positioners, between the casing, metering device base and nozzle.

The structure of the metering assembly provides assembling and maintenance with efficiency and practical effects, nearly without the use of screws, tools or similar devices.

### BRIEF DESCRIPTION OF THE DRAWINGS

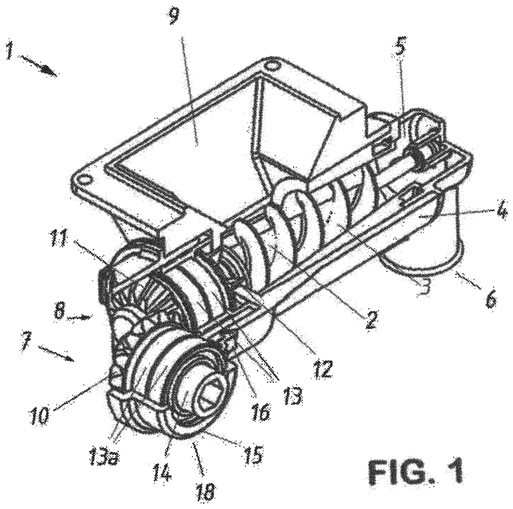

Aiming at a better understanding of the solid fertilizer metering assembly herein presented Figures are attached to which reference will be made, in combination with the description which follows, where
- Figure 1 is a perspective view of the assembly as a whole, with an upper longitudinal cut to demonstrate the positioning and interconnection of its main components;

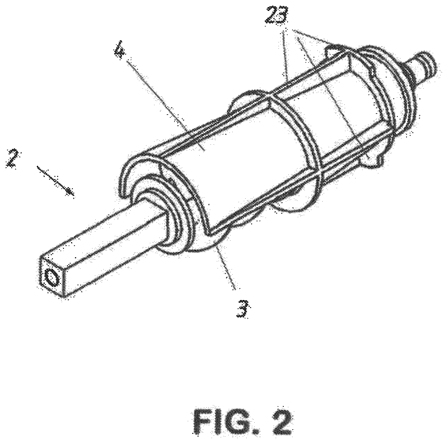

- Figure 2 is a perspective view of the fertilizer metering spindle, protected by its casing;

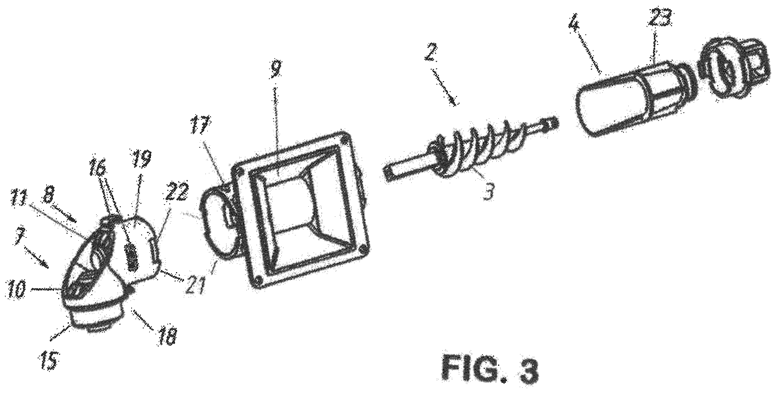

- Figure 3 illustrates an exploded perspective view including a few of its main components;

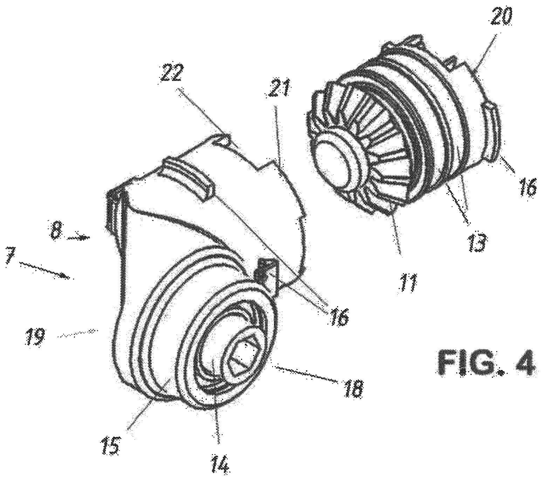

- Figure 4 shows, respectively, an exploded view and perspective view of the bearing assemblies of the longitudinal shaft and of the metering spindle;

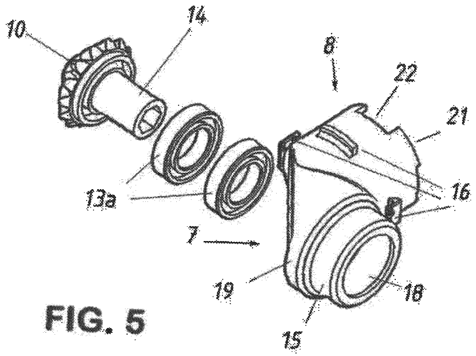

- Figure 5 shows a perspective exploded view encompassing the main components of the bearing assembly of the longitudinal shaft;

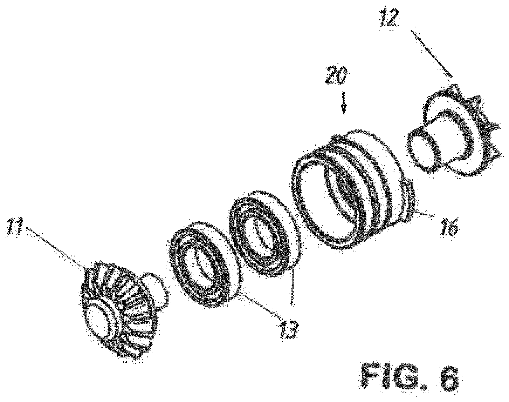

- Figure 6 shows a perspective exploded view encompassing the main components of the bearing assembly of the metering spindle shaft.

### DETAILED DESCRIPTION OF THE PREFERRED EMBODIMENT

Upon examination of the above-mentioned drawings in combination with the description below, it can be seen that the present application for a patent of invention is directed to a solid fertilizer metering assembly belonging to the field of application of the mechanisms utilized in agricultural machines and implements. Said assembly 1 comprises a metering spindle 2 in a single body, of conical shape, with a cylindrical cone body, with constant screw turns 3 consisting of one or more screw turns which follow the initial helical screw angle, besides a casing 4 also of cylindrical conical shape, providing an empty space 5 at the end of the helical screw of the said metering spindle 2 and an outlet 6 for the fertilizer towards the line conductor, wherein the structure of the bearing assembly 7 for the transmission of the longitudinal shaft associated with the metering spindle shaft assembly 8 separated from the base 9 of the metering assembly ensures correct meshing of the longitudinal gearing 10 with the gearing 11 of the metering shaft, and the separation of the bearings from the metering assembly by means of the rib-cooled motor 12 mounted next to the bearings 13 and to the actuation pinion 14 of the metering spindle 2, the longitudinal gearing 10 also using roller bearings 13a. The coupling of the bearing 15 to the base 9 of the metering assembly is assured by the quick locking system with the aid of locks 16 belonging to bearing 15 in a cavity 17 belonging to the base 9 of the metering assembly, the same being true for nozzle 18, the structure of the bearing being based on the connection of parts, comprising the longitudinal shaft body assembly 19 and the connecting bushing assembly 20, so as to secure the perfect adjustment of same as well as the practical assembling of said components, also secured by male positioner 21 and female positioner 22 between same, while the positioning of the casing 4 of the metering spindle 2 is secured by protruding positioners 23 positioned between the same, the base 9 of metering assembly and the nozzle 18.

It should be pointed out that in spite of the fact that the present specification has been described by reference to the preferred mode, it Will be apparent to the experts that further modifications can be introduced, including as relates the materials to be employed to perform the invention, as well as their shapes and dimensions which can be varied and made more suitable to each application, such features being duly encompassed by the present disclosure without departing from the spirit and scope of the disclosed invention.

As can be seen by what has been described and duly illustrated, it can be understood that the present application relates to a solid fertilizer metering assembly which combines a series of advantages which are inherent to its applicability, involving novelty and inventive step, besides industrial applicability, for which it deserves to be granted a patent as requested.

## Claims

1. A solid fertilizer metering assembly, **characterized in that** said assembly 1 comprises a metering spindle 2 in one single, cylindrical conical body, with constant screw turns 3, one or more screw turns, which follow the initial helical screw angle.

2. A solid fertilizer metering assembly, **characterized in that** it comprises a casing 4, also of cylindrical conical shape, providing an empty space 5 at the end of the helical screw of the said metering spindle 2 and an outlet 6 for the fertilizer towards the line conductor.

3. A solid fertilizer metering assembly, **characterized in that** the structure of the bearing assembly 7 for the transmission of the longitudinal shaft associated with the metering spindle shaft assembly 8 separated from the base 9 of the metering assembly ensures correct meshing of the longitudinal gearing 10 with the gearing 11 of the metering shaft, and the separation of the bearings from the metering assembly by means of the rib-cooled motor 12 mounted next to the bearings 13 and to the actuation pinion 14 of the metering assembly, the longitudinal gearing 10 also using roller bearings 13a.

4. The solid fertilizer metering assembly of claims 1, 2 and 3, **characterized in that** the connection of bearing 15 to the base 9 of said metering assembly is made by latches 16 belonging to bearing 15 in a cavity 17 belonging to the base 9 of said metering assembly, the same occurring with nozzle 18, the structure of the bearing assembly being based on the connection of parts, comprising the longitudinal shaft body assembly 19 and the connecting bushing assembly 20, also secured by male positioner 21 and female positioner 22 between same, while the positioning of the casing 4 of the metering spindle 2 is secured by protruding positioners 23 positioned between the same, the base 9 of metering assembly and the nozzle 18.
